Europäisches Patentamt

European Patent Office

Office européen des brevets

(11) Veröffentlichungsnummer : **0 079 628**
**B1**

(12)     . **EUROPÄISCHE PATENTSCHRIFT**

(45) Veröffentlichungstag der Patentschrift :
**20.08.86**

(21) Anmeldenummer : **82201278.7**

(22) Anmeldetag : **14.10.82**

(51) Int. Cl.⁴ : **H 02 B    1/24**

(54) **Schaltanlage.**

(30) Priorität : **12.11.81 CH 7268/81**

(43) Veröffentlichungstag der Anmeldung :
**25.05.83 Patentblatt 83/21**

(45) Bekanntmachung des Hinweises auf die Patenterteilung : **20.08.86 Patentblatt 86/34**

(84) Benannte Vertragsstaaten :
**CH DE FR LI SE**

(56) Entgegenhaltungen :
**DE-A- 1 540 610**
**FR-A- 2 458 160**
**US-A- 4 247 787**

(73) Patentinhaber : **BBC Aktiengesellschaft Brown,
Boveri & Cie.
Haselstrasse
CH-5401 Baden (CH)**

(72) Erfinder : **Köppi, Georg, Dipl.-Ing.
Waldmatt 14
CH-5242 Birr (CH)**

Jouve, 18, rue St-Denis, 75001 Paris, France

EP 0 079 628 B1

## Beschreibung

Die Erfindung betrifft eine Schaltanlage gemäss dem ersten Teil von Patentanspruch 1.

Eine solche Schaltanlage ist aus Fig. 4 der US-A-4 247 787 bekannt. Bei der bekannten Schaltanlage sind mindestens vier Knotenpunkte über unterbrechbare Stromzweige in Form eines Ringes geschaltet miteinander verbunden. Je zwei von vier der Knotenpunkte sind darüber hinaus jeweils über einen von zwei schliessbaren Brückenzweigen paarweise miteinander verbindbar. Hierdurch ist es möglich, bei Ausfall eines der vier Knotenpunkte durch Schliessen eines der beiden Brückenzweige die intakten drei Brückenzweige zu einem redundanten Teilring zusammenzuschalten. Bei Ausfall eines weiteren der vier Knotenpunkte lässt sich jedoch kein Teilring mehr bilden und fallen zugleich auch alle Knotenpunkte aus, welche zwischen den beiden ausgefallenen der vier Knotenpunkte angeordnet sind. So fallen bei der Ausführungsform nach Fig. 4 (b) nach Ausfall der Knotenpunkte 18a und 18b etwa die zwischen den Schaltstellen 17a und 19a sowie 19a und 20a gelegenen Knotenpunkte weg.

Aus der US-A-1 540 610 ist es bekannt, dass eine über eine erste Leistungsschaltstelle mit einem ersten Abzweig verbundene erste Sammelschiene über eine Serienschaltung eines ersten Trennschalters, eines Kupplungsschalters und eines zweiten Trennschalters mit einem zweiten Abzweig verbindbar ist, welcher über eine zweite Leistungsschaltstelle mit einer zweiten Sammelschiene verbindbar ist, und dass die zweite Sammelschiene über eine Serienschaltung eines dritten Trennschalters, des Kupplungsschalters und eines vierten Trennschalters mit dem ersten Abzweig verbindbar ist. Hierdurch ist es möglich, jeden der beiden Abzweige an jede der beiden Sammelschienen anzuschliessen.

Eine weitere Schaltanlage ist etwa aus dem Artikel von B. Stepinski « Neuzeitliche Gesichtspunkte beim Bau von Freiluft-Schaltanlagen bis 765 kV » in Brown Boveri Mitt. 65, 1978 (4) 268 ff bekannt. Bei dieser Anlage sind in den die Knotenpunkte verbindenden Stromzweigen Unterbrechereinheiten vorgesehen, welche im allgemeinen aus einer Reihenschaltung eines ersten Trennschalters, eines Leistungsschalters, eines Messwandler und eines zweiten Trennschalters bestehen. Fällt bei einer solchen Anlage ein Sammelschienensystem oder eine Unterbrechereinheit aus, so bleibt die Energieversorgung dennoch gewährleistet, da die ungestörten Knotenpunkte der Anlage trotz Freischaltung des gestörten Systemteils unter sich in Verbindung bleiben.

Von A. Klimann ist in Electrical World, August 15, 1979, Seite 60 ff eine Schaltanlage mit hoher Redundanz vorgeschlagen worden. Bei dieser Schaltanlage sind die Unterbrecher als « Pyramide » geschaltet. Diese Schaltanlage weist gegenüber der Ringanordnung eine verbesserte Versorgungssicherheit auf, jedoch werden hierbei eine sehr grosse Anzahl an Trennschaltern, beispielsweise bei einer Unterstation mit sechs Feldern, 10 Leistungs- und 33 Trennschalter benötigt, was einen grossen Aufwand an Platz und Kosten bedingt.

Es ist Aufgabe der Erfindung, eine Schaltanlage der gattungsgemässen Art derart weiterzubilden, dass deren Redundanz mit geringem apparativem Aufwand und kleinem Platzbedarf auch bei einer beliebigen Anzahl von Knotenpunkten gegeben ist.

Diese Aufgabe wird durch die im Kennzeichen von Patentanspruch 1 angegebenen Merkmale gelöst. Die erfindungsgemässe Schaltanlage zeichnet sich durch hohe Zuverlässigkeits- und Verfügbarkeitswerte aus, ohne einen grösseren apparativen Aufwand zu verursachen. Da jeder Knotenpunkt einer eine beliebige Anzahl von Knotenpunkten enthaltenden Schaltanlage über drei parallel angeordnete Schaltstellen mit dem restlichen Ringsystem verbunden werden kann, verbleiben bei Ausfall einer Schaltstelle zwei weitere Schaltstellen durch die die Verbindung des vom Ausfallen der Schaltstelle betroffenen Knotenpunktes mit dem restlichen Ring sichergestellt ist. Fällt nun noch eine weitere der beiden genannten Schaltstellen aus, so ist die Versorgung des betroffenen Knotenpunktes wegen der Funktionssicherheit der dritten Schaltstelle gewährleistet. Fällt hingegen einer der Knotenpunkte aus, so lässt sich wiederum ein redundantes Ringsystem bilden. Fällt darüber hinaus noch ein weiterer Knotenpunkt aus, so lassen sich die verbleibenden intakten Knotenpunkte unter Bildung eines redundanten Teilrings miteinander verbinden oder können zumindest zwei redundante Teilringe gebildet werden.

Weitere vorteilhafte Ausführungen der erfindungsgemässen Schaltanlage sind in den abhängigen Ansprüchen angegeben.

Nachfolgend sind Ausführungsbeispiele der Erfindung anhand der Zeichnungen in vereinfachter Form dargestellt.

Hierbei zeigt :

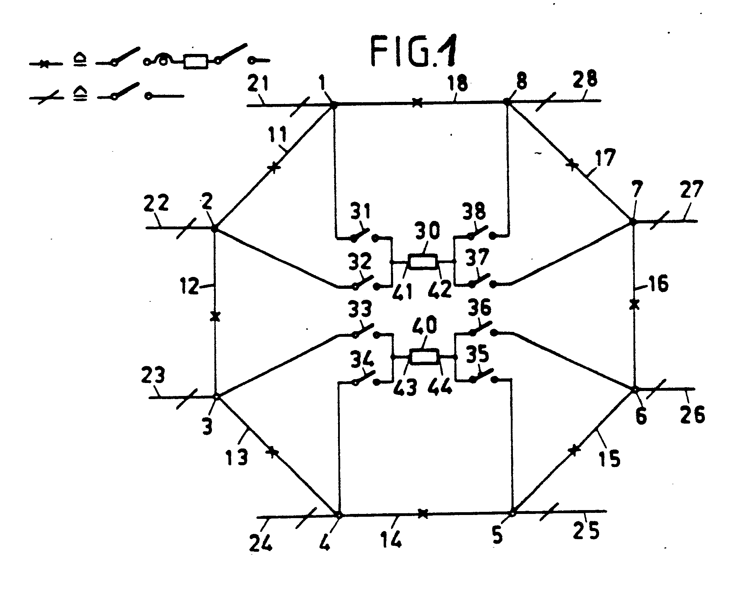

Figur 1 ein Schaltschema einer erfindungsgemässen Schaltanlage, bei der eine erste und zweite bzw. eine dritte und vierte Gruppe von ringförmig geschalteten Knotenpunkten über einen ersten bzw. einen zweiten Leistungs- oder Lastschalter mittels kreuzungsfrei geführter Brückenzweige miteinander verbindbar sind,

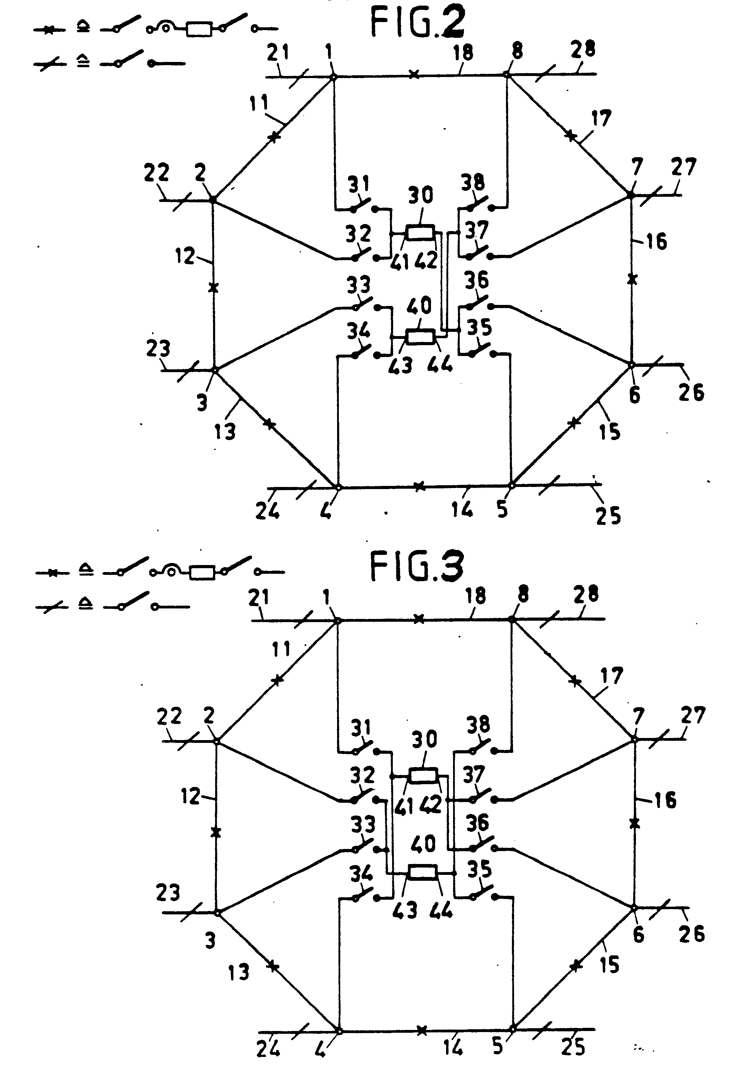

Figur 2 ein Schaltschema einer erfindungsgemässen Schaltanlage, bei der eine erste und zweite bzw. eine dritte und vierte Gruppe von ringförmig geschalteten Knotenpunkten über einen ersten bzw. einen zweiten Leistungs- oder Lastschalter mittels sich einfach kreuzender Brückenzweige miteinander verbindbar sind, und

Figur 3 ein Schaltschema einer erfindungsgemässen Schaltanlage, bei der eine erste und zweite bzw. eine dritte und vierte Gruppe von ringförmig geschalteten Knotenpunkten über einen ersten bzw. einen zweiten Leistungs- oder Lastschalter mittels sich zweifach kreuzender Brückenzweige miteinander verbindbar sind.

In allen Figuren sind gleiche Teile mit gleichen Bezugszeichen versehen. Das in Fig. 1 dargestellte Schaltschema einer ersten Ausführungsform der erfindungsgemässen Schaltanlage weist Knotenpunkte 1 bis 8 auf. Diese Knotenpunkte sind ringförmig geschaltet und längs des Ringumfanges aufeinanderfolgend numeriert. Jeder der Knotenpunkte 1 bis 8 grenzt an zwei benachbarte Knotenpunke, mit denen er mittels zweier der Stromzweige 11 bis 18 verbunden ist, an. In jedem der Stromzweige 11 bis 18 ist eine durch ein Kreuz gekennzeichnete Schaltstelle vorgesehen. Jede Schaltstelle kann aus einer Serienschaltung eines Trennschalters mit einem Leistungs- oder Lastschalter, einem Stromwandler und einem weiteren Trennschalter bestehen. An den Knotenpunkten 1 bis 8 sind Stromabgänge und -einspeisungen 21 bis 28 vorgesehen. In jedem Stromabgang bzw. in jeder Stromeinspeisung ist ein lediglich symbolisch durch einen Querstrich bezeichneter Trennschalter sowie gegebenenfalls ein Ueberspannungsableiter und ein Erdungsschalter vorgesehen.

Die Knotenpunkte 1 bis 8 sind darüber hinaus aber auch über Brückenzweige verbindbar. Diese Brückenzweige sind im Inneren des Ringes geführt. Sie weisen jeweils einen Trennschalter 31 oder 32, einen Leistungs- oder Lastschalter 30 und einen weiteren Trennschalter 37 oder 38 auf bzw. einen Trennschalter 33 oder 34, einen Leistungs- oder Lastschalter 40 und einen weiteren Trennschalter 35 oder 36 auf. Jeder der Trennschalter 31, 32 ist hierbei einerseits jeweils mit einem der Knotenpunkte 1, 2 einer ersten Gruppe der Knotenpunkte und andererseits mit einer Anschlussklemme 41 des Leistungs- oder Lastschalters 30 verbunden. Jeder der Trennschalter 37, 38 ist einerseits jeweils mit einem der Knotenpunkte 7, 8 einer zweiten Gruppe der Knotenpunkte und andererseits mit einer zweiten Anschlussklemme 42 des Leistungs- oder Lastschalters 30 verbunden. Entsprechend ist jeder der Trennschalter 33, 34 einerseits jeweils mit einem der Knotenpunkte 3, 4 einer dritten Gruppe der Knotenpunkte und andererseits mit einer Anschlussklemme 43 des Leistungs- oder Lastschalters 40 verbunden. Jeder der Trennschalter 35, 36 ist entsprechend jeweils mit einem der Knotenpunkte 5, 6 einer dritten Gruppe der Knotenpunkte und andererseits mit der Anschlussklemme 44 des Leistungs- oder Lastschalters 40 verbunden. Den Leistungs- oder Lastschaltern 30 bzw. 40 kann jeweils ein den zugeordneten Brückenzweigen gemeinsamer Stromwandler nachgeschaltet sein.

Die Wirkungsweise einer derartigen Anlage ist nun wie folgt : Im normalen Betriebszustand der Schaltanlage werden die in den Stromzweigen 11 bis 18 des Ringes angeordneten Schaltstellen geschlossen und die in den Brückenzweigen vorgesehenen Trenn- bzw. Leistungsschalter 31, ..., 38 bzw. 30, 40 offen sein. Dadurch wird vermieden, dass bei einem Fehler auf einer Leitung jeweils drei Schalter betätigt werden. Bei einem dauernden Fehler an einem Knotenpunkt kann dann durch Schliessen eines der Brückenzweige über den Leistungs- oder Lastschalter 30 wieder ein Ring gebildet werden. Ist beispielsweise der Knotenpunkt 2 nicht verfügbar, so werden zunächst die Trennschalter 31 und 37 sodann der Leistungs- oder Lastschalter 30 geschlossen und ein Ring mit den Knotenpunkten 1, 3, 4, 5, 6, 7 und 8 gebildet.

Fällt bei dieser Schaltanlage nun noch ein weiterer Knotenpunkt aus, so ist es wegen des Vorhandenseins des Leistungs- oder Lastschalters 40 in weiteren Brückenzweigen, welche die Knotenpunkte der dritten und vierten Gruppe von Knotenpunkten verbinden, möglich, gegebenenfalls zwei redundante Teilringe zu bilden, z. B. bei Ausfall der Knotenpunkte 2 und 6 Teilringe mit den Knotenpunkten 1, 7 und 8 bzw. 3, 4 und 5, oder die intakten Knotenpunkte unter Bildung zumindest eines redundanten Teilringes, z. B. des von den Knotenpunkten 1, 7 und 8 gebildeten Teilrings bei Ausfall der Knotenpunkte 2 und 4, zu verbinden.

Die Schaltanlage gemäss Fig. 2 weist gegenüber der Anlage gemäss Fig. 1 den Unterschied auf, dass sich zwei Brückenzweige zwischen den Anschlussklemmen 42 bzw. 44 und den Trennschaltern 35, 36 bzw. 37, 38 kreuzen. Mit einer derart ausgeführten Schaltanlage lassen sich andere Teilringe als bei der vorstehend beschriebenen Anlage bilden, wobei durch das Auskreuzen der Brückenzweige eine noch grössere Redundanz gewonnen wird.

Bei der Anlage gemäss Fig. 3 überkreuzen sich die Brückenzweige zwischen beiden Anschlusklemmen 41, 42 bzw. 43, 44 jedes der beiden Leistungs- oder Lastschalter 30, 40 und den zugeordneten Knotenpunkten 1, 2, ..., 8, wodurch wiederum andere Knotenpunkte verbindbar sind, beispielsweise einer der Knotenpunkte 1 oder 4 mit einem der Knotenpunkte 6 oder 7 bzw. einer der Knotenpunkte 2 oder 3 mit einem der Knotenpunkte 5 oder 8. Für jede mögliche Kombination von 2 nicht verfügbaren Knotenpunkten können bei dieser Schaltanlage alle intakten Knotenpunkte zumindest über Teilringe verbunden werden.

Vorzugsweise enthalten die eine Ringverbindung zwischen den Knotenpunkten 1 bis 8 bewirkenden Stromzweige 11 bis 18 konventionelle Hochspannungskomponenten, wie Freiluftschalter, -wandler und -trennschalter, welche über Leiterseile oder -rohre miteinander verbunden sind, sie können aber auch gekapselte, gasisolierte Schaltstellen und Verbindungsleitungen aufweisen. Die vorzugsweise im Ring befindlichen Brückenzweige enthalten im allgemeinen Komponenten, etwa Leistungs- und Trennschalter, Stromwandler und Rohrgaskabel wie sie in gekapselten, gasisolierten Schaltanlagen verwendet werden. Diese Komponenten sind über Durchführungen mit den Knotenpunkten verbunden. Es ist aber auch denkbar, dass die Brückenzweige, insbesondere bei den kreuzungsfrei ausgeführten Schaltanlagen gemäss den Figuren 1 und 2, in Freilufttechnik ausgebildet sind. Bei den Schaltanlagen gemäss den Figuren 3 und 4 empfiehlt es sich, die sich kreuzenden Brückenzweigabschnitte vorzugsweise als nebeneinander verlegbare Rohrgaskabel oder Kabelverbindungen auszuführen, es ist aber auch möglich, sie als sich kreuzende Freileitungsabschnitte auszubilden.

**Patentansprüche**

1. Schaltanlage mit mindestens vier Knotenpunkten (1, 2, ..., 8) und unterbrechbaren Stromzweigen (11, 12, ..., 18), bei der die Knotenpunkte (1, 2, ..., 8) über die Stromzweige (11, 12, ..., 18) in Form eines Ringes geschaltet miteinander verbunden sind und mindestens je zwei (z. B. 1, 8 ; 3, 6) der Knotenpunkte paarweise miteinander verbindbar sind über jeweils einen von zwei Brückenzweigen mit jeweils einem Leistungs- oder Lastschalter (30, 40) sowie zwei Trennschaltern (z. B. 31, 38 ; 33, 36), welche Trennschalter jeweils zwischen einer Anschlussklemme (z. B. 41) der Leistungs- oder Lastschalter und den Knotenpunkten (z. B. 1) angeordnet sind, dadurch gekennzeichnet, dass jeder Knotenpunkt einer mindestens zwei Knotenpunkte (1, 2) umfassenden ersten Gruppe von Knotenpunkten mit jedem Knotenpunkt einer zweiten Gruppe von Knotenpunkten (7, 8) verbindbar ist über Brückenzweige, welche den ersten (30) der beiden Leistungs- oder Lastschalter (30, 40) gemeinsam aufweisen, und dass jeder Knotenpunkt einer dritten Gruppe von Knotenpunkten (3, 4) mit jedem Knotenpunkt einer vierten Gruppe von Knotenpunkten (5, 6) verbindbar ist über Brückenzweige, welche den zweiten (40) der beiden Leistungs- oder Lastschalter (30, 40) gemeinsam aufweisen.

2. Schaltanlage nach Anspruch 1, dadurch gekennzeichnet, dass die vier Gruppen alle Knotenpunkte (1, 2, ..., 8) der Schaltanlage enthalten.

3. Schaltanlage nach Anspruch 1, dadurch gekennzeichnet, dass sich mindestens einer der Brückenzweige, welcher den ersten (30) der Leistungs- oder Lastschalter (30, 40) enthält, mit mindestens einem der Brückenzweige kreuzt, welcher den zweiten (40) der Leistungs- oder Lastschalter (30, 40) enthält (Fig. 2).

4. Schaltanlage nach Anspruch 3, dadurch gekennzeichnet, dass sich die Brückenzweige zwischen beiden Anschlussklemmen (41, 42 ; 43, 44) jedes der beiden Leistungs- oder Lastschalters (30, 40) und den zugeordneten Knotenpunkten (1, 2, ..., 8) kreuzen (Fig. 3).

5. Schaltanlage nach einem der Ansprüche 1 bis 4, dadurch gekennzeichnet, dass alle Strom- und Brückenzweige gekapselte, gasisolierte Schaltstellen und Verbindungsleitungen aufweisen.

6. Schaltanlage nach einem der Ansprüche 1 bis 4, dadurch gekennzeichnet, dass alle Strom- und Brückenzweige Freiluftschaltstellen und -verbindungen aufweisen.

7. Schaltanlage nach einem der Ansprüche 1 bis 4, dadurch gekennzeichnet, dass die Stromzweige (11, 12, ..., 18) Freiluftschaltstellen und -verbindungen und die Brückenzweige gekapselte, gasisolierte Schaltstellen und Verbindungen aufweisen.

8. Schaltanlage nach einem der Ansprüche 1 bis 4, dadurch gekennzeichnet, dass die Stromzweige (11, 12, ..., 18) Freiluftschaltstellen und -verbindungen und die Brückenzweige Freiluftschaltstellen und Rohrgaskabel oder Kabelverbindungen aufweisen.

9. Schaltanlage nach Anspruch 3, dadurch gekennzeichnet, dass die sich kreuzenden Brückenzweige Freiluftschaltstellen und nebeneinander verlegte Hochspannungskabel aufweisen.

**Claims**

1. Switching system comprising at least four nodes (1, 2, ..., 8) and interruptable current branches (11, 12, ..., 18), in which system the nodes (1, 2, ..., 8) are connected to each other via the current branche (11, 12, ..., 18) connected in the form of a ring and at least two each (for example 1, 8 ; 3, 6) of the nodes can be connected to each other in pairs via in each case one of two bridge branches by means of one circuit breaker or load switch (30, 40) in each case and two isolating switches (for example 31, 38 ; 33, 36), which isolating switches are in each case arranged between a connecting terminal (for example 41) of the circuit breakers or load switches and the nodes (for example 1), characterised in that each node of a first group of nodes, comprising at least two nodes (1, 2), can be connected to each node of a second group of nodes (7, 8) via bridge branches which are jointly provided with the first (30) of the two circuit breakers or load switches (30, 40) and that each node of a third group of nodes (3, 4) can be connected to each node of a fourth group of nodes (5, 6) via bridge branches which are jointly provided with the second one (40) of the two circuit breakers or load switches (30, 40).

2. Switching system according to Claim 1, characterised in that the four groups contain all nodes (1, 2, ..., 8) of the switching system.

3. Switching system according to Claim 1, characterised in that at least one of the bridge branches, which contains the first one (30) of the circuit breakers or load switches (30, 40) crosses over at least one of the bridge branches which contains the second one (40) of the circuit breakers or load switches (30, 40) (Figure 2).

4. Switching system according to Claim 3, characterised in that the bridge branches cross each other between the two connecting terminals (41, 42 ; 43, 44) of each of the two circuit breakers or load switches (30, 40) and the associated nodes (1, 2, ..., 8) (Figure 3).

5. Switching system according to one of Claims 1 to 4, characterised in that all current and bridge branches are provided with encapsulated, gas-insulated switching points and connecting lines.

6. Switching system according to one of Claims 1 to 4, characterised in that all current and bridge branches are provided with outdoor switching points and connections.

7. Switching system according to one of Claims 1 to 4, characterised in that the current branches (11, 12, ..., 18) are provided with outdoor switching points and connections and the bridge branches are provided with encapsulated, gas-insulated switching points and connections.

8. Switching system according to one of Claims 1 to 4, characterised in that the current branches (11, 12, ..., 18) are provided with outdoor switching points and connections and the bridge branches are provided with outdoor switching points and pipe-type gas cables or cable connections.

9. Switching system according to Claim 3, characterised in that the bridge branches crossing each other are provided with outdoor switching points and with high-voltage cables which are run next to each other.

## Revendications

1. Installation de commutation comportant au moins quatre points nodaux (1, 2, ..., 8) et des dérivations pouvant être interrompues (11, 12, ..., 18), dans laquelle les points nodaux (1, 2, ..., 8) sont interconnectés en boucle par l'intermédiaire des dérivations (11, 12, ..., 18) et au moins deux par exemple (1, 8 ; 3, 6) des points nodaux peuvent respectivement être interconnectés par paire par l'intermédiaire chaque fois d'une de deux branches de pont comportant respectivement un interrupteur de puissance ou de coupure en charge (30, 40) et deux sectionneurs, par exemple (31, 38 ; 33, 36), ces sectionneurs étant disposés chaque fois entre une borne de connexion (par exemple 41) de l'interrupteur de puissance ou de coupure en charge et les points nodaux (par exemple 1), caractérisée en ce que chaque point nodal d'un premier groupe de points nodaux comprenant au moins deux points nodaux (1, 2) peut être connecté à chaque point nodal d'un deuxième groupe de points nodaux (7, 8) par l'intermédiaire de branches de pont qui possèdent en commun le premier (30) des deux interrupteurs de puissance ou de coupure en charge (30, 40) et chaque point nodal d'un troisième groupe de points nodaux (3, 4) peut être connecté à chaque point nodal d'un quatrième groupe de points nodaux (5, 6) par l'intermédiaire de branches de pont qui comprennent en commun le deuxième (40) des deux interrupteurs de puissance et de coupure en charge (30, 40).

2. Installation de commutation suivant la revendication 1, caractérisée en ce que les quatre groupes comprennent tous les points nodaux (1, 2, ..., 8) de l'installation de commutation.

3. Installation de commutation suivant la revendication 1, caractérisée en ce qu'au moins une des branches de pont, qui contient le premier (30) des interrupteurs de puissance ou de coupure en charge (30, 40), croise au moins une des branches de pont qui contient le deuxième (40) des interrupteurs de puissance ou de coupure en charge (30, 40) (Fig. 2).

4. Installation de commutation suivant la revendication 3, caractérisée en ce que les branches de pont entre les deux bornes (41, 42 ; 43, 44) de chacun des deux interrupteurs de puissance ou de coupure en charge (30, 40) et les points nodaux associés (1, 2, ..., 8) se croisent.

5. Installation de commutation suivant l'une quelconque des revendications 1 à 4, caractérisée en ce que toutes les dérivations et toutes les branches de pont comprennent des endroits de commutation isolés par du gaz et cuirassés et des conduites de connexion.

6. Installation de commutation suivant l'une quelconque des revendications 1 à 4, caractérisée en ce que toutes les dérivations et toutes les branches de pont comprennent des connexions et des endroits de commutation pour l'extérieur.

7. Installation de commutation suivant l'une quelconque des revendications 1 à 4, caractérisée en ce que les dérivations (11, 12, ..., 18) comprennent des connexions et des endroits de commutation pour l'extérieur et les branches de pont des connexions et des endroits de commutation isolés par du gaz et cuirassés.

8. Installation de commutation suivant l'une quelconque des revendications 1 à 4, caractérisée en ce que les dérivations (11, 12, ..., 18) comprennent des connexions et des endroits de commutation pour l'extérieur et les branches de pont des endroits de commutation pour l'extérieur et des câbles à gaz en tuyaux ou des connexions par câbles.

9. Installation de commutation suivant la revendication 3, caractérisée en ce que les branches de pont qui se croisent comprennent des endroits de commutation pour l'extérieur et des câbles à haute tension posés les uns à côté des autres.

# FIG.1

0 079 628

# FIG.2

# FIG.3